(19) Europäisches Patentamt
European Patent Office
Office européen des brevets

(11) EP 2 420 544 A2

(12) # EUROPEAN PATENT APPLICATION
published in accordance with Art. 153(4) EPC

(43) Date of publication:
**22.02.2012 Bulletin 2012/08**

(21) Application number: **10764644.0**

(22) Date of filing: **14.04.2010**

(51) Int Cl.:
***C09J 11/04*** *(2006.01)* ***C09J 133/08*** *(2006.01)*

(86) International application number:
**PCT/KR2010/002290**

(87) International publication number:
**WO 2010/120105 (21.10.2010 Gazette 2010/42)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.04.2009 KR 20090033183**

(71) Applicant: **LG Chem, Ltd.**
**Youngdungpo-gu**
**Seoul 150-721 (KR)**

(72) Inventors:
- **KIM, Se Ra**
  **Daejeon 305-816 (KR)**
- **KIM, Kee Young**
  **Daejeon 305-340 (KR)**
- **HWANG, Yoon Tae**
  **Daejeon 305-340 (KR)**
- **HAN, In Cheon**
  **Seoul 138-162 (KR)**

(74) Representative: **Goddar, Heinz J.**
**Forrester & Boehmert**
**Pettenkoferstrasse 20-22**
**80336 München (DE)**

(54) **ADHESIVE COMPOSITION**

(57) [Summary]
The present invention relates to a pressure sensitive adhesive composition, a polarizing plate and a liquid crystal display device. The present pressure sensitive adhesive composition may provide a pressure sensitive adhesive having excellent endurance reliability, optical physical property, workability and adhesion property in high temperature or high humidity condition. Especially, the present pressure sensitive adhesive composition may provide a pressure sensitive adhesive that antistatic property suitable to the applied use can be stably maintained for a long time.

EP 2 420 544 A2

## Description

[Technical Field]

The present invention relates to a pressure sensitive composition, a polarizing plate and a liquid crystal display device.

[Background Art]

A liquid crystal display (LCD) device is a device which displays images using liquid crystals, and has advantages of being less power consumption and being able to be made flat and thin, so that it gets the spotlight in various fields.

A polarizing plate of an optical component used in the liquid crystal display device has a multilayer structure comprising, usually, a polyvinyl alcohol polarizer and a protective film formed on one side or both sides of said polarizer. In addition, the polarizer comprises, generally, a pressure sensitive adhesive which is formed on one side of said protective film such that a polarizing plate may be attached to a liquid crystal panel, and a release film formed on the pressure sensitive adhesive.

In a process of peeling the release film from the polarizing plate to attach the liquid crystal panel thereto, static electricity is frequently generated. Such generated static electricity affects liquid crystal molecular orientation inside the liquid crystal panel to cause defects such as a malfunction.

To control generation of such static electricity, methods, such as a method of forming an antistatic layer on any outer surface of the polarizing plate, have been known. However, the conventional methods for controlling generation of static electricity have poor effects, so that they cannot prevent inherently from generating static electricity.

Patent Reference 1 discloses a process for preparing an antistatic pressure sensitive adhesive composition using an ionic compound having a melting point of 50˚C or more.

In the Patent Reference 1, it is described that the pressure sensitive adhesive having good low temperature stability may be prepared using the above ionic compound. However, the ionic compound in the Patent Reference 1 is in a solid phase at room temperature. Such ionic compound is easily precipitated from the pressure sensitive adhesive, and thus, optical transparency and antistatic property of the adhesive are deteriorated.

[Disclosure]

[Technical Problem]

An object of the present invention is to provide a pressure sensitive adhesive composition, a polarizing plate and a liquid crystal display device.

[Technical Solution]

The present invention relates to a pressure sensitive adhesive composition comprising a pressure sensitive adhesive resin; and a salt, which is in a liquid phase at room temperature, having a cation of Chemical Formula 1 and an anion of Chemical Formula 2:.

[Chemical Formula 1]

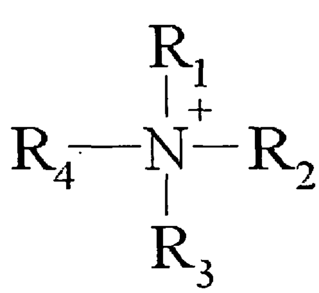

[Chemical Formula 2] $[X(YO_mR_f)_n]^-$

wherein, $R_1$ to $R_4$ represent each independently hydrogen, alkyl, alkoxy, alkenyl or alkynyl, X represents nitrogen or carbon, Y represents carbon or sulfur, $R_f$ represents a perfluoroalkyl group, m represents 1 or 2, and n represents 2 or 3.

The present pressure sensitive adhesive composition is explained in detail below.

The pressure sensitive adhesive resin to be capable of being used herein is not particularly limited to any kind, and all the general base resins used in preparing pressure sensitive adhesives may be used. An example of such pressure sensitive adhesive resins may include an acrylic resin, a silicone resin, a gum resin, a urethane resin, a polyester resin or an epoxy resin, and the like. In one embodiment of the present invention, an acrylic resin having excellent optical properties, and the like, of the above pressure sensitive adhesive resins, may be used.

When the acrylic resin is used as the pressures-sensitive adhesive resin herein, said acrylic resin may be, for example, a polymer of a monomer mixture comprising (meth)acrylic acid ester monomer and a crosslinkable monomer.

In this case, said (meth)acrylic acid ester monomer is not particularly limited to any kind. For example, alkyl (meth)acrylate may be used herein, and particularly, in view of controlling cohesive attraction, glass transition temperature and adhesion property of the pressure sensitive adhesive, alkyl (meth)acrylate with an alkyl group of 1 to 14 carbon atoms, preferably 1 to 8 carbon atoms, may be used. An example of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth) acrylate, isooctyl (meth)acrylate or isononyl (meth)acrylate, and the like, and one or at least two of the foregoing in combination thereof may be used herein.

The crosslinkable monomer included in the monomer mixture herein refers to a compound comprising simultaneously, in the molecule, a copolymerizable functional group such as a carbon-carbon double bond and a crosslinkable functional group. Said crosslinkable monomer may give the acrylic resin the crosslinkable functional group to provide a crosslinkable site, or serve to control endurance reliability, adhesion strength and cohesive attraction of the pressure sensitive adhesive under high temperature or high humidity condition.

A hydroxyl group containing monomer, a carboxyl group containing monomer or a nitrogen containing monomer, and the like may be included as an example of the crosslinkable monomer to be capable of being used herein, and one or at least two of the foregoing in combination thereof may be used. 2-Hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate or 2-hydroxypropylene glycol (meth)acrylate may be included as an example of the hydroxyl group containing monomer to be capable of being used herein; acrylic acid, methacrylic acid, 2-(meth)acryloyloxy acetic acrid, 3-(meth)acrylolyoxy propionic acid 4-(meth)acryloyloxy butyric acid, acrylic acid dimmer, itaconic acid or maleic acid, and the like may be included as an example of the carboxyl group containing monomer to be capable of being used herein; 2-isocyanatoethyl (meth)acrylate, 3-isocyanatopropyl (meth)acrylate, 4-isocyanatobutyl (meth)acrylate, (meth)acrylamide, N-vinyl pyrrolidone or N-vinyl caprolactam, and the like may be included as an example of the nitrogen containing monomer, without being limited thereto.

The monomer mixture herein may comprise 90 to 99.9 parts by weight of (meth)acrylic acid ester monomer and 0.1 to 10 parts by weight of the crosslinkable monomer. By regulating the ratio of monomer in the monomer mixture in the above range, the pressure sensitive adhesive having excellent endurance, adhesion and workability, and the like under high temperature or high humidity condition may be provided.

Without being particularly defined otherwise in the specification, the unit "part by weight"refers to ratio by weight.

Said monomer mixture herein may further comprise any co-monomer. An example of the co-monomer as above is a compound having a copolymerizable functional group and may include a compound having a glass transition temperature of -130°C to 50°C in non-crosslinked condition when it was polymerized into homoplymer. In one embodiment of the present invention, the co-monomer as above may be a compound represented by the following Chemical Formula 3.

[Chemical Formula 3]

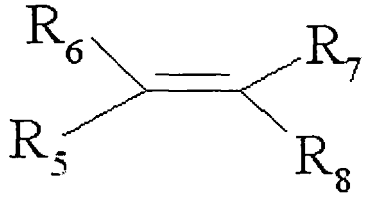

wherein, $R_5$ to $R_7$ represent each independently hydrogen or alkyl, $R_8$ represents cyano; phenyl unsubstituted or substituted with alkyl; acetyloxy; or $COR_9$, where $R_9$ represents amino or glycidyloxy unsubstituted or substituted with alkyl or alkoxyalkyl.

In definitions of $R_6$ to $R_9$ in the above formula, alkyl or alkoxy may refer to linear, branched or cyclic alkyl or alkoxy having 1 to 12 carbon atoms, 1 to 8 carbon atoms or 1 to 4 carbon atoms, and be particularly methyl, ethyl, methoxy, ethoxy, propoxy or butoxy.

Specific examples of said compound of Chemical Formula 3 to be capable of being used herein may include one or at least two of a nitrogen containing monomer such as (meth)acrylonitrile, N-methyl (meth)acrylamide or N-butoxymethyl (meth)acrylamide; a styrene monomer such as styrene or methyl styrene; glycidyl (meth)acrylate; vinyl ester of carboxylic acid such as vinyl acetate, and the like, without being limited thereto.

The monomer mixture according to the present invention may comprise said compound of Chemical Formula 3 in an amount of 20 parts by weight or less. If the ratio in said compound of Chemical Formula 3 is too high herein, it is apprehended that flexibility or peel force of the pressure sensitive adhesive will be lowered.

Any process for preparing an acrylic resin by polymerizing said monomer mixture is not particularly restricted. For example, general polymerization methods, such as solution polymerization, photo polymerization, bulk polymerization, suspension polymerization or emulsion polymerization, may be used, without being limited thereto, but it is preferred to use solution polymerization of the foregoing.

The pressure sensitive adhesive composition according to the present invention comprises a salt, which is able to give the pressure sensitive adhesive an antistatic performance, together with said pressure sensitive adhesive resin.

The salt used herein is present in a liquid phase at room temperature. The term 'room temperature'herein is a natural temperature as such, which is not heated or cold. For example, it may mean a temperature of about 10 to 30˚C, about 15 to 30˚C or about 25˚C. By using such a salt which is present in a liquid phase at room temperature herein, the pressure sensitive adhesive may maintain excellent optical physical property, adhesion property, workability and antistatic property at the same time, even if an excess of the salt is relatively combined, if necessary. In addition, the present invention may use the liquid phase salt as above to solve problems that even if the pressure sensitive adhesive is held or stored for a long time, the salt is precipitated from it, or its optical transparency or adhesion property, and the like, is deteriorated over time.

The salt used herein comprises a cation represented by the following Chemical Formula 1 as a cation.

[Chemical Formula 1]

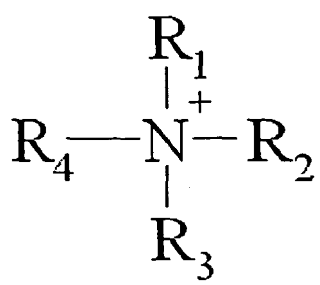

wherein, $R_1$ to $R_4$ represent each independently hydrogen, alkyl, alkoxy, alkenyl or alkynyl.

In definitions of the above Chemical Formula 1, alkyl or alkoxy may be alkyl or alkoxy having 1 to 20 carbon atoms, 1 to 12 carbon atoms, 1 to 8 carbon atoms or 1 to 4 carbon atoms. In addition, said alkyl or alkoxy may be linear, branched or cyclic alkyl or alkoxy, which may be optionally substituted with at least one substituent.

Furthermore, in definitions of the above Chemical Formula 1, alkenyl or alkynyl may be alkenyl or alkynyl having 2 to 20 carbon atoms, 2 to 12 carbon atoms, 2 to 8 carbon atoms or 2 to 4 carbon atoms. In addition, said alkenyl or alkynyl may be linear, branched or cyclic alkenyl or alkynyl, which may be optionally substituted with at least one substituent.

In definitions of the above Chemical Formula 1, when alkyl, alkoxy, alkenyl or alkynyl is substituted with at least one substituent, an example of the substituent may include hydroxyl, alkyl, alkoxy, alkenyl, alkynyl, cyano, thiol, amino, aryl or heteroaryl, and the lke, without being limited thereto.

In one embodiment of the present invention, $R_1$ to $R_4$ in the above Chemical Formula 1 may be each independently alkyl, and preferably, linear or branched alkyl having 1 to 12 carbon atoms. More preferably, $R_1$ to $R_4$ may each independently represent linear or branched alkyl having 1 to 12 carbon atoms, provided that $R_1$ to $R_4$ do not correspond to alkyl having the same carbon atoms simultaneously. That is, it is preferred to exclude the case that all $R_1$ to $R_4$ are alkyl having the same carbon atoms. If all $R_1$ to $R_4$ are alkyl having the same carbon atoms, the probability that the salt is present in a solid phase at room temperature increases. In that case, since the salt is precipitated from the pressure sensitive adhesive in high temperature condition, it is apprehended that its physical property will be deteriorated over time.

Specific examples of said cation of Chemical Formula 1, which can be used herein, may include one or at least two of N-ethyl-N,N-dimethyl-N-propylammonium, N,N,N-trimethyl-N-propylammonium, N-methyl-N,N,N-tributylammonium, N-ethyl-N,N,N-tributylammonium, N-methyl-N,N,N-trihexylammonium, N-ethyl-N,N,N-trihexylammonium, N-methyl-N,N,N-trioctylammonium or N-ethyl-N,N,N-trioctylammonium, and the like.

More preferably, a cation of the above Chemical Formula 1 may be used, wherein $R_1$ is alkyl having 1 to 3 carbon atoms, and $R_2$ to $R_4$ are each independently alkyl having 4 to 20 carbon atoms, preferably 4 to 15 carbon atoms. and more preferably 4 to 10 carbon atoms. By using such a cation, a pressure sensitive adhesive having more excellent optical physical property, adhesion property, workability and antistatic property may be provided.

As an anion, the salt to be used herein also includes an anion represented by Chemical Formula 2 below:

[Chemical Formula 2] $[X(YO_mR_f)_n]^-$

wherein, X represents nitrogen or carbon, Y represents carbon or sulfur, $R_f$ represents a perfluoroalkyl group, m represents 1 or 2 and n represents 2 or 3.

In the above Chemical Formula 2, possibly, if Y is carbon, m is 1, and if Y is sulfur, m is 2; if X is nitrogen, n is 2, and if X is carbon, n is 3.

Said anion of Chemical Formula 2 herein represents high electronegativity due to the perfluoroalkyl group ($R_f$), and also includes a unique resonance structure to simultaneously represent weak bond character with a cation of Chemical Formula 1 and high hydrophobicity. Therefore, the present salt may give a pressure sensitive adhesive high antistatic property even in a trace amount, while representing excellent compatibility with other components such as a pressure sensitive adhesive resin.

In one aspect of the present invention, $R_f$ in the above Chemical Formula 2 may be a perfluoroalkyl group having 1 to 20 carbon atoms, 1 to 12 carbon atoms, 1 to 8 carbon atoms or 1 to 4 carbon atoms, wherein said perfluoroalkyl group may have a linear, branched or cyclic structure.

Said anion of Chemical Formula 2 may be sulfonyl methide-based, sulfonyl imide-based, carbonyl methide-based or carbonyl imide-based anions, and specifically, one or at least two, in combination thereof, of tristrifluoromethanesulfonyl methide, bistrifluoromethanesulfonyl imide, bisperfluorobutanesulfonyl imide, bispentafluoroethanesulfonyl imide, tristrifluoromethanecarbonyl methide, bisperfluorobuthanecarbonyl imide or bispentafluoroethanecarbonyl imide, and the like.

In one aspect of the present invention, said anion of Chemical Formula 2 may be, preferably, bis(perfluoroalkylsulfonyl imide), wherein said perfluoroalkyl may be perfluoroalkyl having 1 to 12 carbon atoms, preferably 1 to 8 carbon atoms.

Specific examples of said liquid phase salt, which is capable of being used herein, may include one or at least two of N-ethyl-N,N-dimethyl-N-propylammonium bistrifluoromethanesulfonyl imide, N-methyl-N,N,N-trioctylammonium bistrifluoromethanesulfonyl imide, N-methyl-N,N,N-trioctylammonium bispentafluoroethanesulfonyl imide, N-methyl-N,N,N-trioctylammonium tristrifluoromethanecarbonyl methide, N,N,N-trimethyl-N-propylammonium bistrifluoromethanesulfonyl imide, N-methyl-N,N,N-tributylammonium bistrifluoromethanesulfonyl imide, N-ethyl-N,N,N-trioctylammonium bistrifluoromethanesulfonyl imide, N-ethyl-N,N,N-trioctylammonium bispentafluoroethanesulfonyl imide, N-methyl-N,N,N-tributylammonium bispentafluoroethanesulfonyl imide, N-ethyl-N,N,N-tributylammonium bispentafluoroethanesulfonyl imide, N-ethyl-N,N,N-trioctylammonium tristrifluoromethanecarbonyl methide or N-ethyl-N,N,N-tributylammonium bistrifluoromethanesulfonyl imide, and the like; preferably, be one or at least two of N-methyl-N,N,N-trioctylammonium bistrifluoromethanesulfonyl imide, N-methyl-N,N,N-trioctylammonium bispentafluoroethanesulfonyl imide, N-methyl-N,N,N-trioctylammonium tristrifluoromethanecarbonyl methide, N-methyl-N,N,N-tributylammonium bistrifluoromethanesulfonyl imide, N-ethyl-N,N,N-trioctylammonium bistrifluoromethanesulfonyl imide, N-ethyl-N,N,N-trioctylammonium bispentafluoroethanesulfonyl imide, N-methyl-N,N,N-tributylammonium bispentafluoroethanesulfonyl imide, N-ethyl-N,N,N-tributylammonium bispentafluoroethanesulfonyl imide, N-ethyl-N,N,N-trioctylammonium tristrifluoromethanecarbonyl methide or N-ethyl-N,N,N-tributylammonium bistrifluoromethanesulfonyl imide, and the like; and more preferably, be one or at least two of N-methyl-N,N,N-trioctylammonium bistrifluoromethanesulfonyl imide, N-methyl-N,N,N-trioctylammonium bispentafluoroethanesulfonyl imide, N-methyl-N,N,N-tributylammonium bistrifluoromethanesulfonyl imide, N-methyl-N,N,N-tributylammonium bispentafluoroethanesulfonyl imide, N-ethyl-N,N,N-trioctylammonium bistrifluoromethanesulfonyl imide, N-ethyl-N,N,N-trioctylammonium bispentafluoroethanesulfonyl imide, N-ethyl-N,N,N-tributylammonium bistrifluoromethanesulfonyl imide or N-ethyl-N,N,N-tributylammonium bispentafluoroethanesulfonyl imide, and the like, without being limited thereto.

In the present pressure sensitive adhesive composition, the salt may be included in an amount of 0.01 to 50 parts by weight, preferably 0.015 to 45 parts by weight, and more preferably 0.02 to 40 parts by weight, relative to 100 parts by weight of the pressure sensitive adhesive resin. By regulating the ratio of formulating the salt in said range, the pressure sensitive adhesive may maintain excellent antistatic property, adhesion property, optical characteristic, workability and endurance at the same time.

By regulating the ratio of the salt included in the pressure sensitive adhesive composition by weight, the antistatic property, for example, the value of surface resistance may be effectively controlled, depending on use of the pressure sensitive adhesive. For example, the surface resistance of the pressure sensitive adhesive prepared by curing the pressure sensitive adhesive herein may be controlled in a range of $9.9 \times 10^{11}$ Ω/□ or less, $9.9 \times 10^{10}$ Ω/□ or less, or $9.9 \times 10^{9}$ Ω/□ or less. In the above, the pressure sensitive adhesive having a surface resistance of $9.9 \times 10^{11}$ Ω/□ or less may be effectively used, for example, as use of attaching a polarizing plate to the bottom substrate of the liquid crystal panel in which an ITO thin film is formed on the whole surface of the upper substrate; the pressure sensitive adhesive having a surface resistance of $9.9 \times 10^{10}$ Ω/□ or less may be effectively used, for example, as use of attaching a polarizing plate to the liquid crystal panel in which an ITO thin film is partially formed on the substrate; and the pressure sensitive adhesive having a surface resistance of $9.9 \times 10^{9}$ Ω/□ or less may be effectively used as use of attaching a polarizing plate to the liquid crystal panel in which no ITO thin film is formed on the substrate.

In addition, when it is intended to embody the pressure sensitive adhesive having a surface resistance of $9.9 \times 10^{11}$ Ω/□ or less as above, at least 0.01 parts by weight of the salt within the aforementioned range may be included relative to 100 parts by weight of the pressure sensitive adhesive resin; when it is intended to embody the pressure sensitive adhesive having a surface resistance of $9.9 \times 10^{10}$ Ω/□ or less as above, at least 1 part by weight of the salt may be included relative to 100 parts by weight of the pressure sensitive adhesive resin; and when it is intended to embody the pressure sensitive adhesive having a surface resistance of $9.9 \times 10^{9}$ Ω/□ or less as above, at least 4 parts by weight of the salt may be included relative to 100 parts by weight of the pressure sensitive adhesive resin.

Furthermore, by including the above specific cation and anion and also using the salt present in a liquid phase at room temperature to embody each surface resistance as above, herein, the embodied surface resistance may be stably maintained even if the adhesive is left at room temperature, high temperature or high temperature and high humidity condition for a long time.

That is, the present pressure sensitive adhesive composition can comply with requirements of the following General Formulas 1 to 3.

[General Formula 1]

$$X_1 \leq 9.9 \times 10^{11}\ \Omega/\square$$

[General Formula 2]

$$X_2 \leq 9.9 \times 10^{11}\ \Omega/\square$$

[General Formula 3]

$$X_3 \leq 9.9 \times 10^{11}\ \Omega/\square$$

wherein, $X_1$ represents a surface resistance of a pressure sensitive adhesive, a cured material of the pressure sensitive adhesive composition according to the present invention, as measured after being left at 25°C for 1,000 hours, $X_2$ represents a surface resistance of said pressure sensitive adhesive as measured after being left at 80°C for 1,000 hours,

and $X_3$ represents a surface resistance of said pressure sensitive adhesive as measured after being left at 60°C and 90% RH for 1,000 hours.

The unit 'RH' herein represents relative humidity.

That is, by combining the pressure sensitive adhesive composition with the above specific salt, herein, the value of surface resistance of the pressure sensitive adhesive may be not only freely controlled depending on use as described above, but it may be stably maintained over time. In the above, $X_1$, $X_2$ and $X_3$ are each independently $9.9 \times 10^{10}$ Ω/□ or less or $9.9 \times 10^{9}$ Ω/□ or less.

In addition, the present pressure sensitive adhesive composition may further comprise a multifunctional crosslinker.

Without particularly limiting any kind of the crosslinker to be capable of being used herein, for example, a general crosslinker such as an isocyanate compound, an epoxy compound, an aziridine compound and a metal chelate compound may be used. An example of the isocyanate compound to be capable of being used herein may include one or at least two of tolylene diisocyante, xylene diisocyante, diphenylmethane diisocyante, hexamethylene diisocyante, isoboron diisocyante, tetramethylxylen diisocyante or naphthalene diisocyante, or a reactant of at least one isocyanate compound of the foregoing and a polyol compound (for example, trimethylol propane), and the like. Furthermore, an example of the epoxy compound may include one or at least two, in combination thereof, of ethyleneglycol diglycidyl ether, triglycidyl ether, trimethylolpropane triglycidyl ether, N,N,N',N'-tetraglycidyl ethylenediamine and glycerine diglycidyl ether; and an example of the aziridine compound may include one or at least two, in combination thereof, of N,N'-toluene-2,4-bis(1-aziridinecarboxamide), . N,N'-diphenylmethane-4,4'-bis(1-aziridinecarboxamide), triethylene melamine, bisisophthaloyl -1-(2-methylaziridine) and tri-1-aziridinylphosphine oxide, and the like. In addition, an example of the metal chelate compound may include a compound in which a multivalent metal such as aluminum, iron, zinc, tin, titanium, antimony, magnesium or vanadium is coordinated with a compound such as acetyl acetone or ethyl acetoacetate. However, the crosslinker component to be capable of being used herein is not limited to the above kind.

In the present pressure sensitive adhesive composition, the multifunctional crosslinker may be included in an amount of 0.01 to 10 parts by weight, relative to 100 parts by weight of the pressure sensitive adhesive resin. The effective crosslinking reaction may be induced in the above range and the pressure sensitive adhesive having excellent endurance reliability may be provided.

The present pressure sensitive adhesive composition may further comprise a silane coupling agent. Said coupling agent is capable of improving close adhesion, adhesive stability, heat resistance and humidity resistance of the pressure sensitive adhesive with an adherend, specifically a glass substrate, and also serve to enhance attachment reliability, when the pressure sensitive adhesive was left under high temperature or high humidity condition for a long time. The silane coupling agent to be capable of being used herein is not particularly limited to any kind. For example, one or at least two, in combination thereof, of γ-glycidoxypropyltrimethoxy silane, γ-glycidoxypropylmethyldiethoxy silane, γ-glycidoxypropyltriethoxy silane, 3-mercaptopropyltrimethoxy silane, vinyltrimethoxy silane, vinyltriethoxy silane, γ-methacryloxypropyltrimethoxy silane, γ-methacryloxypropyltriethoxy silane, γ-aminopropyltrimethoxy silane, γ-aminopropyltriethoxy silane or 3-isocyanatopropyltriethoxy silane, and the like, may be used.

In the present pressure sensitive adhesive composition, the silane coupling agent may be included in an amount of 0.005 to 5 parts by weight, relative to 100 parts by weight of the pressure sensitive adhesive resin. By controlling the content ratio of the coupling agent as above, the effect of increasing the effective adhesion strength may be secured and the endurance reliability of the pressure sensitive adhesive may be excellently maintained.

The present pressure sensitive adhesive composition may further comprise a tackifier resin. The tackifier resin to be capable of being used herein is not particularly limited to any kind. As those to be usually used in fields of preparing pressure sensitive adhesives, for example, one or at least two, in combination thereof, of hydrocarbon resins or hydrogen adducts thereof; rosin resins or hydrogen adducts thereof; rosin ester resins or hydrogen adducts thereof; terpene resins or hydrogen adducts thereof; terpene phenol resins or hydrogen adducts thereof; polymerized rosin resins or polymerized rosin ester resins, and the like may be used.

In the present invention, said tackifier resin may be included in an amount of 1 to 100 parts by weight, relative to 100 parts by weight of the pressure sensitive adhesive resin, but such a content ratio may be appropriately changed on its purpose.

In addition, the present pressure sensitive adhesive composition may further comprise within a range that does not affect the effect of invention at least one additive selected from the group consisting of an epoxy resin, a crosslinker, a ultraviolet stabilizer, an antioxidant, a toning agent, a reinforcing agent, a filler, a defoamer, a surfactant and a plasticizer.

The present invention also relates to a polarizing plate having a polarizer; and a pressure sensitive adhesive layer formed on one or both sides of said polarizer and comprising a cured material of the pressure sensitive adhesive composition according to the present invention.

The polarizer included in the present polarizing plate is not particularly limited to any kind. For example, as said polarizer, herein, a film prepared by containing a polarizing component such as iodine or a dichroic dye in a polyvinyl alcohol-based resin film and drawing the film may be used. Here, as the polyvinyl alcohol-based resin, polyvinyl alcohol,

polyvinyl formal, polyvinyl acetal or a hydrolyzed product of ethylene-vinyl acetate copolymer, and the like may be used.

The thickness of said polarizer herein is not particularly limited, which is formed to have a usual thickness.

The present polarizing plate may be formed, such that a transparent protective film is attached to one side or both sides of said polarizer, and optionally said pressure sensitive adhesive may be laminated on one side of the transparent protective film. The protective film to be capable of being included in the present polarizer is not particularly limited to any kind, and, for example, a general film, including cellulose-based films such as triacetyl cellulose; polyester-based films such as polyethylene terephthalate film; polycarbonate-based films; acrylic-based films; polyether sulfone-based films; or polyolefin-based films such as polyethylene film, polypropylene film, cyclic-based polyolefin films, norbornene-based polyolefin films or ethylene-propylene copolymer, may be used.

Also, the thickness of said protective film herein is not particularly limited, which may be formed to have a usual thickness.

The method of forming the pressure sensitive adhesive on said polarizer or transparent protective film is not particularly limited. For example, a method of applying the pressure sensitive adhesive composition or the coating liquid comprising the same on said polarizer or transparent protective film with general means such as a bar coater or a comma coater, followed by curing it via heating, drying and/or ageing procedures, or a method of forming the pressure sensitive adhesive on a surface of a peelable substrate as said process, and then transferring the formed pressure sensitive adhesive, and the like, may be used.

In view of carrying out homogeneous coating herein, it is preferred that the functional group of the multifunctional crosslinker to be included in the composition or the coating liquid is controlled not to be subjected to a cross-linking reaction in a procedure for forming the pressure sensitive adhesive. That is, said multifunctional crosslinker may form a cross-linking structure in a procedure of drying or ageing after coating work to enhance cohesive attraction, and thus to improve further adhesion property and cuttability of the pressure sensitive adhesive. In addition, it is preferred herein to use the composition or the coating liquid after sufficiently removing bubble inducing components such as volatile components or reacted residues inside on forming said pressure sensitive adhesive. If crosslink density or molecular weight, and the like, is so low that elastic modulus decreases, it is apprehended that small bubbles present between the pressure sensitive adhesive and the adherend at high temperature will become large to form scattering bodies.

Also, the method of curing the present pressure sensitive adhesive composition on preparing the polarizing plate is not particularly limited, but general light curing or thermal curing ways in this field are applied.

The surface resistance of the pressure sensitive adhesive as above herein may be $9.9 \times 10^{11}$ Ω/□ or less, $9.9 \times 10^{10}$ Ω/□ or less or $9.9 \times 10^{9}$ Ω/□ or less, wherein this value may be stably maintained for a long time, as described above.

In the present polarizing plate, said pressure sensitive adhesive may also have a gel content of 5 to 99%, represented by the following General Formula 4.

[General Formula 4]

$$\text{Gel content (\%)} = B/A \times 100$$

wherein, A represents a mass of the pressure sensitive adhesive layer, and B represents a dry mass of insoluble fraction collected after depositing said pressure sensitive adhesive layer in ethyl acetate at room temperature for 48 hours.

Here, the dry mass of insoluble fraction may be measured by depositing the pressure sensitive adhesive in ethyl acetate at room temperature for 48 hours, collecting insoluble fraction and drying the collected insoluble fraction at an appropriate condition to remove ethyl acetate included therein.

The gel content herein may be regulated in the above range to provide a pressure sensitive adhesive having suitable cohesive attraction and excellent endurance reliability.

In addition, the present polarizing plate may further comprise at least one functional layer selected from the group consisting of a protective layer, a reflective layer, an antiglare layer, a retardation plate, a wide viewing angle compensation film and a brightness enhancing film.

The present invention also relates to a liquid crystal display device comprising a liquid crystal panel in which the above mentioned polarizing plate according to the present invention is bonded on one side or both sides.

The present pressure sensitive adhesive may freely embody the desired value of surface resistance, and be freely applied to various kinds of liquid crystal panels, since the embodied value of surface resistance does not cause change over time.

For example, in one aspect of the present invention, the liquid crystal display device may have a liquid crystal panel including a liquid crystal layer interposed between the upper and bottom transparent substrates; an ITO thin film

formed on the whole upper surface of said upper transparent substrate; and a polarizing plate attached to the ITO thin film on said upper transparent substrate or the bottom transparent substrate via the present pressure sensitive adhesive having a surface resistance of $9.9 \times 10^{11} \Omega/\square$ or less.

Furthermore, in another aspect of the present invention, said liquid crystal display device may have a liquid crystal panel including a liquid crystal layer interposed between the upper and bottom transparent substrates; an ITO thin film partially formed on the upper part of said upper transparent substrate; and a polarizing plate attached to the ITO thin film on the upper part of said upper transparent substrate via the present pressure sensitive adhesive having a surface resistance of $9.9 \times 10^{10} \Omega/\square$ or less.

Furthermore, in the other aspect of the present invention, said liquid crystal display device may have a liquid crystal panel including a liquid crystal layer interposed between the upper and bottom transparent substrates; and a polarizing plate directly attached to said upper transparent substrate via the present pressure sensitive adhesive having a surface resistance of $9.9 \times 10^{9} \Omega/\square$ or less.

The term "polarizing plate directly attached to the upper transparent substrate" above refers to a state that the pressure sensitive adhesive according to the present invention is firsthand attached to the upper transparent substrate of the liquid crystal panel without the ITO thin film usually formed thereon for antistatic purpose and the polarizing plate is attached thereto through the adhesive.

As mentioned above, the value of surface resistance in the present pressure sensitive adhesive may be not only controlled to be suitable for the desired use, but this controlled value of surface resistance be stably maintained even at room temperature or in a severe condition for a long time. Thus, even if the ITO thin film, which is conventionally formed, is partially or not formed, it can prevent problems such as malfunction of devices caused by static electricity, and the like.

The liquid crystal panel composing the present liquid crystal display device as above is not particularly limited to any kind, and includes all the general liquid crystal panels such as TN (Twisted Neumatic), STN (Super Twisted Neumatic), IPS (In Plane Switching) or VA (Vertical Alignment) ways. In addition, any kind of other components included in the present liquid crystal display device and processes for preparation thereof are also not particularly limited, and may be used by selecting general constitution in this field without limitation.

The present pressure sensitive adhesive composition may be also applied to various fields that optical transparency, endurance reliability and antistatic property are required, including said liquid crystal display device, and, for example, be used in uses for various industrial sheets such as reflective sheets, structural pressure sensitive adhesive sheets, pressure sensitive adhesive sheets for photography, pressure sensitive adhesive sheets for lane marking, optical pressure sensitive adhesive products, pressure sensitive adhesives for electronic components, and protective films. Furthermore, the present pressure sensitive adhesive composition may be also applied to fields such as laminate products with a multilayer structure, for example, general commercial pressure sensitive adhesive sheet products, medical patches or heat activated pressure sensitive adhesives.

[Advantageous Effects]

The present pressure sensitive adhesive composition may provide the pressure sensitive adhesive having durability, optical physical property, workability and adhesion property in high temperature or high humidity condition. Specifically, the present pressure sensitive adhesive composition may provide the pressure sensitive adhesive that antistatic property suitable to the applied use can be stably maintained for a long time.

[Mode for Invention]

Through examples according to the present invention and comparative examples not according to the present invention, the present invention is explained in more detail below, but the scope of the present invention is not restricted to the following examples.

Example 1

**<u>Preparation of acrylic copolymer</u>**

98.3 parts by weight of n-Butyl acrylate (BA) and 1.7 parts by weight of hydroxyethyl metacrylate (2-HEMA) were poured in a 1 L reactor refluxed by nitrogen gas and equipped with a refrigerator for easy temperature control, and 100 parts by weight of ethyl acetate (EAc) as a solvent was poured therein. Subsequently, to remove oxygen, nitrogen gas was purged for 1 hour and the mixture was homogenized in a state of maintaining the temperature of the reactor at 62˚C and 0.03 parts by weight of azobisisobutyronitrile (AIBN) as an initiator, which was diluted in ethyl acetate to a concentration of 50 % by weight, was poured therein. Then, the above mixture was reacted for 8 hours to prepare an

acrylic resin.

**Preparation of pressure sensitive adhesive polarizing plate**

0.5 Parts by weight of tolylene diisocyante adduct (TDI-1) of trimethylolpropane and 0.5 parts by weight of N-methyl-N,N,N-tributylammonium bistrifluoromethanesulfonyl imide were mixed, relative to 100 parts by weight of the above prepared acrylic resin, and diluted to an appropriate concentration to prepare a coating liquid. Then, the prepared coating liquid was coated on a release paper, and dried and aged in an appropriate condition to prepare a pressure sensitive adhesive having a thickness of 25 μm. Subsequently, the prepared pressure sensitive adhesive was laminated on an iodine-type polarizing plate having a thickness of 185 μm to prepare a pressure sensitive adhesive polarizing plate.

**Examples 2 to 4 and Comparative Examples 1 to 7**

Pressure sensitive adhesive polarizing plates were prepared by the same method as Example 1 above, except that constituents in the pressure sensitive adhesive composition were changed as represented by the following tables 1 and 2.

[Table 1]

| | | Example | | | |
|---|---|---|---|---|---|
| | | 1 | 2 | 3 | 4 |
| Resin | n-BA | 98.3 | 98.3 | 85.4 | 98.3 |
| | MA | - | - | 10.3 | - |
| | AA | - | - | 4.1 | - |
| | 2-HEMA | 1.7 | 1.7 | 0.2 | 1.7 |
| Crosslinker | | 0.5 | 0.5 | 0.5 | 0.5 |
| Salt | A-1 | - | 3.5 | 5.2 | 30.8 |
| | A-2 | 0.5 | - | 10.3 | - |

n-BA: n-butyl acrylate
MA: methyl acrylate
AA: acrylic acid
2-HEMA: 2-hydroxyethyl methacrylate
Crosslinker: tolylene diisocyanate adduct of trimethylol propane
A-1: N-methyl-N,N,N-trioctylammonium bistrifluoromethanesulfonyl imide (liquid phase at 25˚C)
A-2: N-methyl-N,N,N-tributylammonium bistrifluoromethanesulfonyl imide (liquid phase at 25˚C)
Unit of Content: part by weight

[Table 2]

| | | Comparative Example | | | | | | |
|---|---|---|---|---|---|---|---|---|
| | | 1 | 2 | 3 | 4 | 5 | 6 | 7 |
| Resin | n-BA | 85.4 | 95.5 | 98.3 | 98.3 | 98.3 | 98.3 | 98.3 |
| | MA | 10.3 | - | - | - | - | - | - |
| | AA | 4.1 | 4.5 | - | - | - | - | - |
| | 2-HEMA | 0.2 | - | 1.7 | 1.7 | 1.7 . | 1.7 | 1.7 |
| Crosslinker | | 0.5 | 0.5 | 0.5 | 0.5 | 0.5 | 0.5 | 0.5 |

(continued)

| | | Comparative Example | | | | | | |
|---|---|---|---|---|---|---|---|---|
| | | 1 | 2 | 3 | 4 | 5 | 6 | 7 |
| Salt | B-1 | - | - | 30.8 | - | - | - | - |
| | B-2 | 10.3 | 5.3 | - | - | - | - | - |
| | B-3 | - | - | - | 0.5 | - | - | - |
| | B-4 | - | - | - | - | 30.8 | - | - |
| | B-5 | - | - | - | - | - | 30.8 | - |
| | B-6 | - | - | - | - | - | - | 30.8 |

n-BA: n-butyl acrylate
MA: methyl acrylate
AA: acrylic acid
2-HEMA: 2-hydroxyethyl methacrylate
Crosslinker: tolylene diisocyante adduct of trimethylol propane
B-1: N-hexylpyridinium bistrifluoromethanesulfonyl imide (liquid phase at 25˚C)
B-2: 4-methyl-N-hexylpyridinium hexafluorophosphate (liquid phase at 25˚C)
B-3: 4-methyl-N-hexylimidazolium bistrifluoromethanesulfonyl imide (liquid phase at 25˚C)
B-4: cyclohexyltrimethylammonium bis(tritluoromethanesulfonyl)imide (solid phase at 25˚C)
B-5: N,N,N,N-tetrabutylammonium bistrifluoromethanesulfonyl imide (solid phase at 25˚C)
B-6: N-methyl-N,N,N-trioctylammonium hexafluorophosphate (liquid phase at 25˚C)
Unit of Content: part by weight

For polarizing plates prepared from Examples and Comparative Examples above, their physical properties were measured by the following methods.

**1. Evaluation of endurance reliability**

The polarizing plate was cut in a size of 262 mm x 465 mm (width x length) to prepare a sample, which was attached to both sides of a glass substrate (300 mm x 470 mm x 0.7 mm = width x length x height) in a state that optical absorption axes were crossed, to prepare a specimen. The pressure applied on attaching was about 5 kg/cm$^2$, and the above procedure was worked in a clean room, such that bubbles or foreign materials were not caused. To identify hygrothermal resistance characteristics of the prepared specimen, said specimen was left at 60˚C and 90% RH for 1,000 hours, followed by observing whether or not bubbles or peel-off was present. In addition, for heat resistance characteristics, the specimen was left at 80˚C for 1,000, followed by observing whether or not bubbles or peel-off was present as above. Each specimen was left in heat resistance or hygrothermal resistance condition as above and then at room temperature for 24 hours, its state was immediately evaluated, depending on the following evaluation standard.

<Evaluation Standard of Endurance Reliability>

O: no bubble or peel-off phenomenon
△: slight bubbles or peel-off phenomenon
×: bubbles or peel-off phenomenon was present

**2. Evaluation of Surface Resistance**

The polarizing plate was left at 25˚C and 50% RH (room temperature condition); 80˚C (heat resistance condition); and 60˚C and 90% RH (hygrothermal resistance condition) for 1,000 hours, respectively, and the surface resistance in each case was measured. The specimens left in heat resistance and hygrothermal resistance conditions as above were subject to evaluation after leaving each specimen at room temperature for 24 hours just before the evaluation. Furthermore, the surface resistance was measured after removing the release film from the polarizing plate and specifically,

the value of surface resistance was measured after applying a voltage of 500 V for 1 minute under an environment of 23˚C and 50% RH.

### 3. Evaluation of Electrostatic Stain

A polarizing plate having a pressure sensitive adhesive formed on one side was cut in a size of 32 inches (400 mm x 708 mm = width x length) to prepare a sample, wherein the pressure sensitive adhesive was prepared by changing values of surface resistance below, depending on any kind and structure of liquid crystal panels, followed by observing electrostatic stain on or after attaching the sample to a 32 inch liquid panel.

#### Evaluation A

When the polarizing plate with peeling the release film formed on the pressure sensitive adhesive was attached to a usual liquid crystal panel (panel A), it was observed using a backlight whether electrostatic stain, that is, whitening phenomenon was caused. In addition, the above specimen (polarizing plate) was left at 25˚C and 50% RH (room temperature condition); 80˚C (heat resistance condition); and 60˚C and 90% RH (hygrothermal resistance condition) for 1,000 hours, respectively, and then, when the release film was peeled and the polarizing plate was attached to the liquid crystal panel as above, it was observed whether electrostatic stain, that is, whitening phenomenon was caused.

#### Evaluation B

When the polarizing plate with peeling the release film formed on the pressure sensitive adhesive was attached to the upper substrate, on which the ITO thin film was partially formed, of a liquid crystal panel (panel B), it was observed using a backlight whether whitening phenomenon was caused. In addition, the polarizing plate was left at 25˚C and 50% RH (room temperature condition); 80˚C (heat resistance condition); and 60˚C and 90% RH (hygrothermal resistance condition) for 1,000 hours, and then, when the release film was peeled and the polarizing plate was attached to the liquid crystal panel (panel B) as above, it was observed whether whitening phenomenon was caused. Also, the liquid crystal panel (panel B) attaching the polarizing plate was located on a module equipped with a backlight, and the like, and with scanning an ion gun (20 kV, 25 cycles/sec), it was observed using the backlight whether whitening phenomenon was caused. Furthermore, the specimen (polarizing plate) was left at 25˚C and 50% RH (room temperature condition); 80˚C (heat resistance condition); and 60˚C and 90% RH (hygrothermal resistance condition) for 1,000 hours, and it was observed using the ion gun as above whether electrostatic stain was caused. In case of specimens left in the heat resistance condition and the hygrothermal resistance condition, the test was carried out after they were left at room temperature for 24 hours just before evaluation.

#### Evaluation C

When the polarizing plate with peeling the release film formed on the pressure sensitive adhesive was attached to a liquid crystal panel (panel C) that no ITO film was formed on the upper substrate, it was observed using a backlight whether whitening phenomenon was caused. In addition, the specimen (polarizing plate) was left at 25˚C and 50% RH (room temperature condition); 80˚C (heat resistance condition); and 60˚C and 90% RH (hygrothermal resistance condition) for 1,000 hours, and then, when the release film was peeled and the polarizing plate was attached to the liquid crystal panel (panel C) as above, it was observed whether whitening phenomenon was caused. Also, the liquid crystal panel (panel C) attaching the polarizing plate was located on a module equipped with a backlight, and the like, and with scanning an ion gun (20 kV, 25 cycles/sec), it was observed using the backlight whether whitening phenomenon was caused. Furthermore, the specimen was left at 25˚C and 50% RH (room temperature condition); 80˚C (heat resistance condition); and 60˚C and 90% RH (hygrothermal resistance condition) for 1,000 hours, and it was observed using the ion gun as above whether electrostatic stain was caused. In case of specimens left in the heat resistance condition and the hygrothermal resistance condition, the test was carried out after they were left at room temperature for 24 hours just before evaluation.
<when the release film is peeled >

- o: no electrostatic stain
- x: electrostatic stain is caused and does not disappear for several seconds or more

<when the ion gun is applied >

- ◎: electrostatic stain disappears within 1 sec.

○: electrostatic stain disappears within 3 sec.
×: electrostatic stain does not disappear for 3 sec or more.

Each result of measuring as above was arranged and described in the following tables 3 to 5.

[Table 3]

| | | Example | | | |
|---|---|---|---|---|---|
| | | 1 | 2 | 3 | 4 |
| Evaluation Method | | A | B | C | C |
| Endurance Reliability | Heat Resistance | ○ | ○ | ○ | ○ |
| | Hygrothermal Resistance | ○ | ○ | ○ | ○ |
| Surface Resistance (Ω/□) | Room Temperature | $3.6\times10^{11}$ | $1.8\times10^{10}$ | $1.3\times10^{9}$ | $2.9\times10^{8}$ |
| | Heat Resistance | $3.8\times10^{11}$ | $1.7\times10^{10}$ | $1.3\times10^{9}$ | $2.6\times10^{8}$ |
| | Hygrothermal Resistance | $3.6\times10^{11}$ | $1.7\times10^{10}$ | $1.0\times10^{9}$ | $2.4\times10^{8}$ |
| Electrostatic Stain (RT/HR/HTR) | On peeling release film | ○/○/○ | ○/○/○ | ○/○/○ | ○/○/○ |
| | On scanning ion gun | - | ○/○/○ | ○/○/○ | ◎/◎/◎ |
| (RT: room temperature; HR: heat resistance; HTR: hygrothermal resistance) | | | | | |

[Table 4]

| | | Comparative Example | | | |
|---|---|---|---|---|---|
| | | 1 | 2 | 3 | 4 |
| Evaluation Method | | C | B | C | A |
| Endurance Reliability | Heat Resistance | × | ○ | × | ○ |
| | Hygrothermal Resistance | × | ○ | ○ | ○ |
| Surface Resistance | Room Temperature | $2.1\times10^{9}$ | $2.0\times10^{10}$ | $6.1\times10^{8}$ | $3.6\times10^{11}$ |
| | Heat Resistance | $3.4\times10^{12}$ | $3.3\times10^{12}$ | $1.6\times10^{10}$ | $3.4\times10^{12}$ |
| | (Ω/□) Resistance | | $1.8\times10^{12}$ | $9.5\times10^{10}$ | $8.4\times10^{12}$ |
| Electrostatic Stain (RT/HR/HTR) | On peeling release film | ○/×/× | ○/×/× | ○/○/○ | ○/×/× |
| | On scanning ion gun | ○/×/× | ○/×/× | ○/×/× | - |
| (RT: room temperature; HR: heat resistance; HTR: hygrothermal resistance) | | | | | |

[Table 5]

| | | Comparative Example | | |
|---|---|---|---|---|
| | | 5 | 6 | 7 |
| Evaluation Method | | C | C | C |
| Endurance Reliability | Heat Resistance | × | × | × |
| | Hygrothermal Resistance | × | × | × |

(continued)

| | | Comparative Example | | |
|---|---|---|---|---|
| | | 5 | 6 | 7 |
| **Surface Resistance (Ω/□)** | **Room Temperature** | Deposit and/or crystallization of salt in pressure sensitive adhesive | | $2.3\times10^{9}$ $2.3\times10^{9}$ |
| | **Heat Resistance** | | | $8.2\times10^{11}$ |
| | **Hygrothermal Resistance** | | | $9.3\times10^{11}$ |
| **Electrostatic Stain (RT/HR/HTR)** | **On peeling release film** | | | o/o/o |
| | **On scanning ion gun** | | | ○/×/× |
| (RT: room temperature; HR: heat resistance; HTR: hygrothermal resistance) | | | | |

As can be seen from results of the above table 3, the examples according to the present invention represented no change of surface resistance over time as well as excellent endurance reliability in the heat resistance and hygrothermal resistance conditions. In addition, the present examples showed excellent antistatic property even after being left in a severe condition and excellent characteristics that no electrostatic stain was caused on or after being attached to a liquid crystal panel as well.

However, in case of comparative example 1 to 4, it could be predicted that endurance reliability decreased and/or surface resistance increased over time, so that antistatic property decreased rapidly, and also large electrostatic stains were caused on being applied to the liquid crystal panel.

Furthermore, in case of comparative examples 5 and 6 comprising a cation belonging to Chemical Formula 1 and an anion belonging to Chemical Formula 2, but using a salt being solid phase at room temperature, the contained salt component was deposited and/or crystallized from the pressure sensitive adhesive, so that endurance reliability and optical transparency were highly lowered; and in case of comparative example 7 without any kind of anion belonging to Chemical Formula 2, it was confirmed that surface resistance increased highly and also endurance reliability deteriorated.

## Claims

1. A pressure sensitive adhesive composition comprising a pressure sensitive adhesive resin; and a salt, which is in a liquid phase at room temperature, having a cation of Chemical Formula 1 and an anion of Chemical Formula 2:

[Chemical Formula 1]

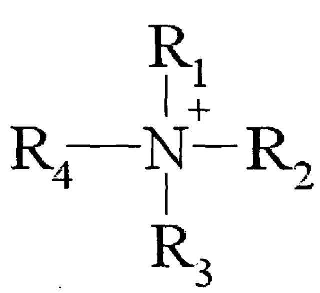

[Chemical Formula 2] $[X(YO_mR_f)_n]^-$

wherein, $R_1$ to $R_4$ represent each independently hydrogen, alkyl, alkoxy, alkenyl or alkynyl, X represents nitrogen or carbon, Y represents carbon or sulfur, $R_f$ represents a perfluoroalkyl group, m represents 1 or 2, and n represents 2 or 3.

**2.** The pressure sensitive adhesive composition according to claim 1, wherein the pressure sensitive adhesive resin is a polymer of a monomeric mixture comprising a (meth)acrylic acid ester monomer and a crosslinkable monomer.

**3.** The pressure sensitive adhesive composition according to claim 1, wherein $R_1$ to $R_4$ represent each independently a linear or branched alkyl having 1 to 12 carbon atoms.

**4.** The pressure sensitive adhesive composition according to claim 1, wherein $R_1$ to $R_4$ represent each independently a linear or branched alkyl having 1 to 12 carbon atoms, provided that $R_1$ to $R_4$ do not correspond to the alkyl having the same carbon atoms simultaneously.

**5.** The pressure sensitive adhesive composition according to claim 1, wherein the cation of Chemical Formula 1 is N-ethyl-N,N-dimethyl-N-propyl ammonium, N,N,N-trimethyl-N-propyl ammonium, N-methyl-N,N,N-tributyl ammonium, N-ethyl-N,N,N-tributyl ammonium, N-methyl-N,N,N-trihexyl ammonium, N-ethyl-N,N,N-trihexyl ammonium, N-methyl-N,N,N-trioctyl ammonium or N-ethyl-N,N,N-trioctyl ammonium.

**6.** The pressure sensitive adhesive composition according to claim 1, wherein the anion of Chemical Formula 2 is tris (trifluoromethanesulfonyl) methide, bis(trifluoromethanesulfonly) imide, bis(perfluorobutanesulfonyl) imide, bis(pentafluoroethanesulfonyl) imide, tris(trifluoromethanecarbonyl) methide, bis(perfluorobutanecarbonyl) imide or bis (pentafluoroethanecarbonyl) imide.

**7.** The pressure sensitive adhesive composition according to claim 1, wherein the anion of Chemical Formula 2 is bis (perfluoroalkylsulfonyl) imide, where the perfluoroalkyl is a perfluoroalkyl having 1 to 8 carbon atoms.

**8.** The pressure sensitive adhesive composition according to claim 1, wherein the salt, which is in a liquid phase at room temperature, is N-methyl-N,N,N-trioctylammonium bis(trifluoromethanesulfonyl) imide, N-methyl-N,N,N-trioctylammonium bis(pentafluoroethanesulfonyl) imide, N-methyl-N,N,N-tributylammonium bis(trifluoromethanesulfonyl) imide, N-methyl-N,N,N-tributylammonium bis(pentafluoroethanesulfonyl) imide, N-ethyl-N,N,N-trioctylammonium bis(trifluoromethanesulfonyl) imide, N-ethyl-N,N,N-trioctylammonium bis(pentafluoroethanesulfonyl) imide, N-ethyl-N,N,N-tributylammonium bis(trifluoromethanesulfonyl) imide or N-ethyl-N,N,N-tributylammonium bis(pentafluoroethanesulfonyl) imide.

**9.** The pressure sensitive adhesive composition according to claim 1, wherein the salt, which is in a liquid phase at room temperature, is included in an amount of 0.01 to 50 parts by weight, relative to 100 parts by weight of the pressure sensitive adhesive resin.

**10.** The pressure sensitive adhesive composition according to claim 1, complying with requirements of General Formulas 1 to 3:

[General Formula 1]

$$X_1 \leq 9.9 \times 10^{11}\ \Omega/\square$$

[General Formula 2]

$$X_2 \leq 9.9 \times 10^{11}\ \Omega/\square$$

[General Formula 3]

$$X_3 \leq 9.9 \times 10^{11}\ \Omega/\square$$

wherein, $X_1$ represents a surface resistance of a pressure sensitive adhesive, which is a cured material of the pressure sensitive adhesive composition, as measured after being left at 25˚C for 1,000 hours, $X_2$ represents a surface resistance of said pressure sensitive adhesive as measured after being left at 80˚C for 1,000 hours, and $X_3$ represents a surface resistance of said pressure sensitive adhesive as measured after being left at 60˚C and 90% RH for 1,000 hours.

**11.** The pressure sensitive adhesive composition according to claim 1, further comprising a multifunctional crosslinker.

**12.** The pressure sensitive adhesive composition according to claim 11, wherein the multifunctional crosslinker is included in an amount of 0.01 to 10 parts by weight, relative to 100 parts by weight of the pressure sensitive adhesive resin.

**13.** The pressure sensitive adhesive composition according to claim 1, further comprising a silane coupling agent or a tackifier resin.

**14.** A polarizing plate having a polarizer; and a pressure sensitive adhesive layer formed on one side or both sides of said polarizer and comprising a cured material of the pressure sensitive adhesive composition of claim 1.

**15.** A liquid crystal display device comprising a liquid crystal panel, one side or both sides of which is bonded by the polarizing plate of claim 14.